(19) **Europäisches Patentamt**
**European Patent Office**
**Office européen des brevets**

(11) **EP 1 834 861 B1**

(12) **EUROPEAN PATENT SPECIFICATION**

(45) Date of publication and mention
of the grant of the patent:
**31.03.2010 Bulletin 2010/13**

(51) Int Cl.:
**B62D 6/00** *(2006.01)* **B62D 5/04** *(2006.01)*
**B62D 101/00** *(2006.01)* **B62D 113/00** *(2006.01)*
**B62D 119/00** *(2006.01)* **B62D 137/00** *(2006.01)*

(21) Application number: **05795814.2**

(22) Date of filing: **18.10.2005**

(86) International application number:
**PCT/JP2005/019109**

(87) International publication number:
**WO 2006/043540 (27.04.2006 Gazette 2006/17)**

(54) **STEERING DEVICE FOR VEHICLES**

LENKVORRICHTUNG FÜR FAHRZEUGE

DISPOSITIF DE DIRECTION POUR VÉHICULES

(84) Designated Contracting States:
**DE FR**

(30) Priority: **19.10.2004 JP 2004304391**

(43) Date of publication of application:
**19.09.2007 Bulletin 2007/38**

(73) Proprietor: **JTEKT Corporation**
**Osaka-shi**
**Osaka 542-8502 (JP)**

(72) Inventor: **NAKAI, Motoo c/o JTEKT Corporation**
**Osaka 542-8502 (JP)**

(74) Representative: **de Beaumont, Michel**
**Cabinet Beaumont**
**1, rue Champollion**
**38000 Grenoble (FR)**

(56) References cited:
**EP-A- 0 857 638**    **EP-A- 1 375 300**
**EP-A- 1 426 266**    **JP-A- 10 045 012**
**JP-A- 10 045 012**    **JP-A- 2001 525 292**
**JP-A- 2004 129 402**    **JP-A- 2004 142 731**
**US-A1- 2004 118 629**

**Description**

BACKGROUND OF THE INVENTION

1. field of the invention

The present invention relates to a steering device for vehicles comprising: two electric motors imparting a steering force to a steering mechanism of wheels; and controlling means performing drive control of the two electric motors for steering change of wheels with an identical gain based on the steering torque or steering amount, and also relates to a method for controlling therefor.

2. Description of Related Art

Suggested in recent years as a steering device for vehicles is a separate-type steering device wherein steering means inside the vehicle interior is disposed without being connected mechanically with a steering mechanism outside the vehicle interior and an actuator for steering is attached to a portion of the steering mechanism, so that this actuator operates based on the detection result of the operation direction and the operation amount of the steering means and applies a steering force to the steering mechanism so as to perform steering corresponding to operation of the steering means.

Moreover, steering devices for vehicles includes an electric power steering apparatus which assists steering by driving an electric motor in order to reduce the load of the driver. This comprises: an input shaft joined with a steering member (steering wheel or handle); an output shaft joined with steering control wheels via a pinion and a rack or the like; and a connecting shaft for connecting the input shaft and the output shaft, wherein a torque detecting device detects a steering torque applied to the input shaft using the torsional angle generated at the connecting shaft and performs drive control of an electric motor for steering, which interlocks with the output shaft, based on the detected steering torque value..

Some of the steering devices for vehicles described above comprise two electric motors for steering. In this case, some devices apply identical current to the two electric motors since the two electric motors may be controlled in the opposite directions to each other when drive control is performed individually for the two electric motors.

The applicant of the present invention has proposed a separate-type steering device, in Japanese Patent Application Laid-Open No. 10-218000 (1998), also published as EP 0 857 638 A2, and considered as the closest prior art, for operating a main steering motor and an auxiliary steering motor at a predetermined power ratio, and inhibiting the operation of a broken motor when any one motor is broken, so as to enhance the output ratio of the motor which is not broken.

Moreover, disclosed in Japanese Patent No. 3232030 is an electric power steering apparatus which estimates the overshoot of the electric motor current and controls the proportional sensitivity and/or the integration gain of proportional-plus-integral controlling means, so that the overshoot of the electric motor current in a rack-end state can be suppressed.

In a steering device for vehicles as described above comprising two electric motors for steering, a response delay between the steering unit and the steering change unit increases and a steering torque generated on the steering unit side also increases when one electric motor becomes impossible to be driven As a result, there is a problem that the driver feels the heavy weight of the handle while steering, or the output with respect to the steering input delays.

BRIEF SUMMARY OF THE INVENTION

The present invention has been made in view of the circumstances described above, and it is an object of the first and the second aspects to provide a steering device for vehicles comprising two electric motors for steering, with which the steering member (handle) does not become heavy even if one electric motor becomes impossible to be driven, and also to provide a method for controlling therefor.

It is an object of the third aspect to provide a steering device for vehicles comprising two electric motors for steering, with which the steering member (handle) does not feel heavy and an output delay with respect to the steering input does not occur even if one electric motor becomes impossible to be driven, and the driver can be informed of the fact that one electric motor has become impossible to be driven, and also to provide a method for controlling therefor.

A first aspect of a method for controlling steering device for vehicles according to the invention, wherein the steering device comprises two electric motors imparting a steering force to a steering mechanism and controlling means performing drive control of the two electric motors with an identical gain based on a steering torque or a steering amount. The method is characterized in that the control means comprises detecting means for detecting that the electric motors cannot be driven, and the method comprises the step of increasing the gain by a predetermined amount when the detecting means detects that any one of the electric motors cannot be driven.

A first aspect of a steering device for vehicles according to the invention comprises: two electric motors imparting a steering force to a steering mechanism; and controlling means performing drive control of the two electric motors with an identical gain based on a steering torque or a steering amount. The steering device for vehicles of the first aspect is characterized by comprising detecting means for detecting that the electric motors cannot be driven, wherein the controlling means increases the gain by a predetermined amount when the detecting means detects that any one of the electric motors cannot be driven..

A second aspect of the method according to the invention is, in the first aspect, characterized in that the detecting means detects that an electric motor cannot be driven based on a response delay in drive control by the controlling means.

A second aspect of the steering device for vehicles according to the invention is, in the first aspect, characterized in that the detecting means detects that an electric motor cannot be driven based on a response delay in drive control by the controlling means..

A third aspect of the method according to the invention is, in the first or second aspect, characterized in that the control means comprises displaying means, and the method comprises the step of displaying that an electric motor cannot be driven when the detecting means detects that the electric motor cannot be driven.

A third aspect of the steering device for vehicles according to the invention is, in the first or second aspect, characterized by further comprising means for displaying that an electric motor cannot be driven when the detecting means detects that the electric motor cannot be driven.

Realized by a steering device for vehicles according to the first and the second aspects of the invention is a steering device for vehicles comprising two electric motors for steering, with which wheel steering change with respect to handle steering does not delay even if one electric motor becomes impossible to be driven, handle heaviness which occurs when the steering shaft is connected mechanically with the steering mechanism is eliminated, the steering member (handle) does not feel heavy and an output delay with respect to the steering input does not occur.

Realized by a steering device for vehicles according to the third aspect of the invention is a steering device for vehicles comprising two electric motors for steering, with which wheel steering change with respect to handle steering does not delay even if one electric motor becomes impossible to be driven, handle heaviness which occurs when the steering shaft is connected mechanically with the steering mechanism is eliminated, the steering member (handle) does not feel heavy and an output delay with respect to the steering input does not occur, and the driver can be informed of the fact that one electric motor has become impossible to be driven..

The above and further objects and features of the invention will be more fully be apparent from the following detailed description with accompanying drawings.

BRIEF DESCRIPTION OF THE SEVERAL VIEWS OF THE DRAWINGS

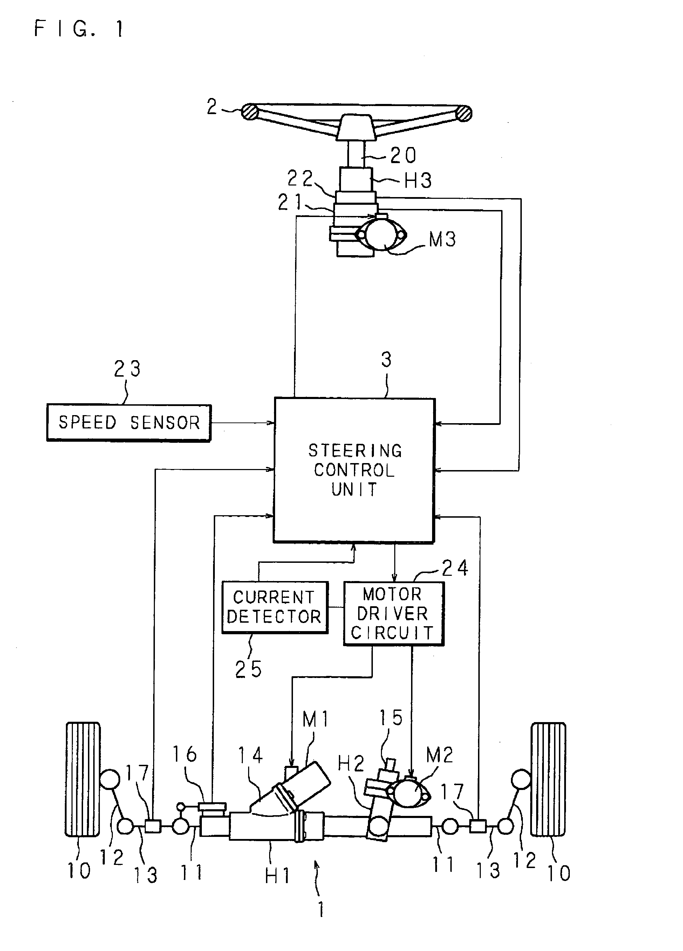

FIG. 1 is an explanatory view schematically showing a configuration of a separate-type steering device which is an embodiment of a steering device for vehicles according to the present invention;

FIG.. 2 is a flow chart showing a steering control operation of the steering device for vehicles shown in FIG. 1;

FIG.. 3 is an explanatory view schematically showing a configuration of an electric power steering apparatus which is an embodiment of the steering device for vehicles according to the present invention; and

FIG.. 4 is a flow chart showing a steering control operation of the steering device for vehicles shown in FIG.. 3.

DETAILED DESCRIPTION OF THE PRESENT INVENTION

The following description will explain the present invention with reference to the drawings illustrating some embodiments thereof.

[Embodiment 1]

FIG. 1 is an explanatory view schematically showing a configuration of a separate-type steering device as Embodiment 1 of a steering device for vehicles according to the present invention. This steering device for vehicles comprises: a steering mechanism 1 for steering right and left front wheels 10, 10; a steering wheel 2 (steering member, handle) disposed mechanically separated from the steering mechanism 1; and a steering control unit 3 performing a predetermined control operation so as to operate the steering mechanism 1 depending on operation of the steering wheel 2.

The steering mechanism 1 is a well known rack-and-pinion steering mechanism wherein both ends of a steering shaft (rack shaft) 11, which is extended from side to side of a vehicle body and moves in the axial direction, are connected with knuckle arms 12, 12 of the front wheels 10, 10 by separate tie rods 13, 13, respectively Movement of the steering shaft 11 in both directions pushes and pulls the knuckle arms 12, 12 via the tie rods 13, 13 and steers the front wheels 10, 10 to the right and left in this configuration,

This steering device for vehicles comprises two steering motors M1, M2 in order to perform the above steering. One steering motor M1 is attached outside a middle portion of a cylindrical housing H1 which bears the steering shaft 11 and the other steering motor M2 is attached outside a pinion housing H2 which is provided continuously to one portion of the housing H1 so as to cross the same. Steering of the front wheels 10, 10 are performed by transmitting rotation of the steering motors M1, M2 to the steering shaft 11 by separate power transmitting means so as to move the steering shaft 11 in the axial direction.

The steering motor M1 is fixed by a flange at an open end of a cylindrical motor bracket 14 which is provided continuously to a middle portion of the housing H1 so as to cross the same obliquely An output shaft of the steering motor M1 is extended inside the motor bracket 14 coaxially, i.e so as to cross the shaft centers of the housing H1 and the steering shaft 11 obliquely, and a small bevel gear not shown is fitted and fixed on an end portion of the output shaft.

Inside the housing H1, a cylindrical ball nut not shown is supported coaxially with the steering shaft 11 so as to be rotatable by a pair of ball bearings which are fitted on both sides of a continuously provided portion of the motor bracket 14. On the outer periphery of the ball nut, a large bevel gear not shown is integrally formed and the large bevel gear meshes with the small bevel gear fitted and fixed on the output shaft of the steering motor M1, so that a bevel gear mechanism is configured by the large bevel gear and the small bevel gear.

When the steering motor M1 is driven to rotate in the above configuration, this rotation is transmitted to the ball nut via the bevel gear mechanism and the ball nut rotates on the axis. This rotation is transformed into movement in the axial direction of the steering shaft 11, so that the front wheels 10, 10 are steered according to this movement.

Inside the pinion housing H2 where the other steering motor M2 is attached, a pinion shaft 15 which is a component of a rack-and pinion steering mechanism is rotatably borne. The pinion shaft 15, whose protruding end above the pinion housing H2 is shown in FIG. 1, is made to be meshed with rack teeth formed at a corresponding portion of the rack shaft 11 inside the housing H1, at a crossing portion of the pinion housing H2 and the housing H1 as is well known.

Moreover, an output end of the steering motor M2 extending inside the pinion housing H2 is made to be a power transmission structure to the pinion shaft 15 via appropriate power transmitting means such as a warm gear mechanism. This power transmission structure is a structure which is in wide practical use in a rack-and-pinion type electric power steering apparatus for power transmission from a motor for steering to a pinion shaft, and explanation on the concrete configuration of each component will be omitted.

When the steering motor M2 is driven to rotate in the above configuration, the pinion shaft 15 rotates under reduction by the power transmitting means such as the warm gear mechanism and this rotation is transformed at a meshing portion with the rack teeth into movement in the axial direction of the steering shaft 11, so that the front wheels 10, 10 are steered according to this movement.

The two steering motors M1, M2 are driven by a motor driver circuit 24 which is controlled by the steering control unit 3; current flowing through the steering motors M1, M2 is detected by a current detector 25; and the detection signal thereof is given to the steering control unit 3.

As described above, the steering motors M1, M2 is driven and controlled according to an operation command from the steering control unit 3. The operation amount of the steering mechanism 1 corresponding to this drive, i.e. an actual steering angle of the right and left front wheels 10, 10, is detected by, for example, a tie rod displacement sensor 16 which detects displacement of a connecting portion of the rack shaft 11 and a tie rod 13 on one side and is given to the steering control unit 3. Moreover, at the tie rods 13, 13 on both sides of the rack shaft 11, tie rod axial force sensors 17, 17 which detect the axial force acting in the axial direction of the tie rods 13, 13 are attached and the detection result thereof is given to the steering control unit 3 as signals indicating the road reaction force applied to the right and left front wheels 10, 10 in association with steering.

Moreover, the steering wheel 2 mechanically separated from the steering mechanism 1 is fixed on an upper end of a column shaft 20 which is rotatably supported at a column housing H3. The column housing H3 is fixed and supported on one portion of the vehicle body not shown and a reaction force motor M3 is attached at the column housing H3. The reaction force motor M3 is made to be a power transmission structure to the column shaft 20 inside the column housing H3 and the rotating force of the reaction force motor M3 driven by an operation command from the steering control unit 3 is applied to the column shaft 20 and the steering wheel 2 as a reaction force in the opposite direction to the direction of the rotation operation of the steering wheel 2 for steering

The steering torque applied to the steering wheel 2 against the above reaction force is detected by a torque sensor 21 attached at a middle portion of the column housing H3. Moreover, the operation amount of the steering wheel 2 is detected by a steering angle sensor 22 disposed on one side of the torque sensor 21 and their detection results are given to the steering control unit 3 as signals indicating the operation state of the steering wheel 2. Furthermore, a signal indicating the vehicle speed detected by a speed sensor 23 is given to the input side of the steering control unit 3.

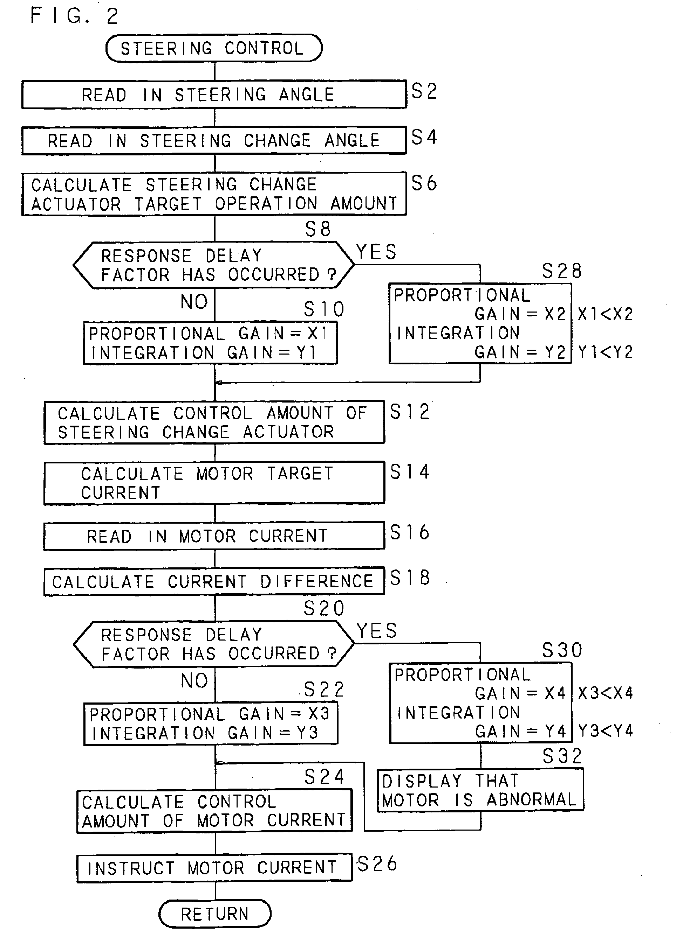

The following description will explain the steering control operation of a vehicle steering device having such a structure with reference to the flow chart in FIG. 2 referring to the same.

Control of the steering motors M1, M2 by the steering control unit 3 is performed by, for example, multiplying the operation amount of the steering wheel 2 detected by the steering angle sensor 22 by a proportional gain to find a target steering angle and performing feedback control based on a difference between this target steering angle and the actual steering angle of the right and left front wheels 10, 10 which is detected by the tie rod displacement sensor 16. Identical current flows through the steering motors M1, M2.

The steering control unit 3 first reads in a steering angle (operation amount) of the steering wheel 2 detected by the steering angle sensor 22 (S2), and reads in a steering change angle (actual steering angle) of the right and left front wheels 10, 10 detected by the tie rod displacement sensor 16 (S4). The steering control unit 3 then calculates a difference between the steering angle and the steering change angle as a steering change actuator target operation amount (S6), and compares the calculated target operation amount with a predetermined value so as to judge whether a response delay factor has occurred or not (S8) (detecting means).

When judging that the calculated target operation amount is smaller than or equal to the predetermined value and a response delay factor has not occurred (S8), the steering control unit 3 sets the proportional gain to a normal value X1 and the integration gain to a normal value Y1 (S10), and calculates a control amount of the steering change actuator by an expression (1) (S12).

$$\text{Control amount} = \text{Target operation amount} \times X1$$
$$+ \text{Integration value of target operation amount} \times Y1 \quad (1)$$

When judging that the calculated target operation amount is larger than the predetermined value and a response delay factor has occurred (S8), the steering control unit 3 sets the proportional gain to a value X2 larger than the normal value X1 and the integration gain to a value Y2 larger than the normal value Y1 (S28), and calculates a control amount of the steering change actuator by an expression (2) (S12).

$$\text{Control amount} = \text{Target operation amount} \times X2$$
$$+ \text{Integration value of target operation amount} \times Y2 \quad (2)$$

Next, the steering control unit 3 calculates a motor target current based on the calculated control amount (S12) of the steering change actuator (S14), and reads in the value of motor current detected by the current detector 25 (S16). The steering control unit 3 then calculates a current difference between the motor target current and the motor current (S18), and compares the calculated current difference with a predetermined current value so as to judge whether a response delay factor has occurred or not (S20) (detecting means).

When judging that the calculated current difference is smaller than or equal to the predetermined current value and a response delay factor has not occurred (S20), the steering control unit 3 sets the proportional gain to a normal value X3 and the integration gain to a normal value Y3 (S22), and calculates a control amount of motor current by an expression (3) (S24).

$$\text{Control amount} = \text{Current difference} \times X3$$
$$+ \text{Integration value of current difference} \times Y3 \quad (3)$$

When judging that the calculated current difference is larger than the predetermined value and a response delay factor has occurred (S20), the steering control unit 3 sets the proportional gain to a value X4 larger than the normal value X3 and the integration gain to a value Y4 larger than the normal value Y3 (S30), and then displays the fact that the motor is abnormal on a display unit not shown (S32). The steering control unit 3 then calculates a control amount of motor current by an expression (4) (S24).

$$\text{Control amount} = \text{Current difference} \times X4$$

$$+ \text{Integration value of current difference} \times Y4 \quad (4)$$

The steering control unit 3 instructs the motor driver circuit 24 to output the calculated control amount (S24) of motor current (S26), and returns the procedure.

[Embodiment 2]

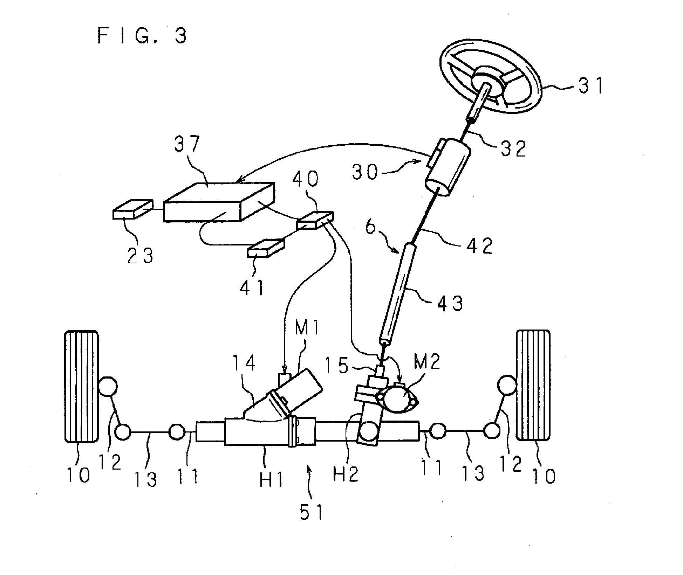

FIG. 3 is an explanatory view schematically showing a configuration of an electric power steering apparatus as Embodiment 2 of a steering device for vehicles according to the present invention. This steering device for vehicles comprises: a steering mechanism 51 for steering right and left front wheels 10, 10; a first steering shaft 32 which functions as steering means connected with a steering wheel 31 for steering; and power transmitting means 6 for transmitting steering of the steering wheel 31 to the steering mechanism 51.

At the power transmitting means 6, a second steering shaft 42 is connected with the first steering shaft 32 via a torsion bar, not shown, of a torque sensor 30 and the second steering shaft 42 is connected with a pinion shaft 15 of the steering mechanism 51 via a connecting shaft 43 such as a universal joint.

The steering mechanism 1 is a well known rack-and-pinion steering mechanism wherein both ends of a steering shaft (rack shaft) 11, which is extended from side to side of a vehicle body and moves in the axial direction, are connected with knuckle arms 12, 12 of the front wheels 10, 10 by separate tie rods 13, 13, respectively Movement of the steering shaft 11 in both directions pushes and pulls the knuckle arms 12, 12 via the tie rods 13, 13 and steers the front wheels 10, 10 to the right and left in this configuration.

This steering device for vehicles comprises two steering motors M1, M2 in order to perform the above steering. One steering motor M1 is attached outside a middle portion of a cylindrical housing H1 which bears the steering shaft 11 and the other steering motor M2 is attached outside a pinion housing H2 which is provided continuously to one portion of the housing H1 so as to cross the same. Steering of the front wheels 10, 10 are performed by transmitting rotation of the steering motors M1, M2 to the steering shaft 11 by separate power transmitting means so as to move the steering shaft 11 in the axial direction. The steering motor M1 is fixed by a flange at an open end of a cylindrical motor bracket 14 which is provided continuously to a middle portion of the housing H1 so as to cross the same obliquely. An output shaft of the steering motor M1 is extended inside the motor bracket 14 coaxially, i.e. so as to cross the shaft centers of the housing H1 and the steering shaft 11 obliquely, and a small bevel gear not shown is fitted and fixed on an end portion of the output shaft.

Inside the housing H1, a cylindrical ball nut not shown is supported coaxially with the steering shaft 11 so as to be rotatable by a pair of ball bearings which are fitted on both sides of a continuously provided portion of the motor bracket 14. On the outer periphery of the ball nut, a large bevel gear not shown is integrally formed and the large bevel gear meshes with the small bevel gear fitted and fixed on the output shaft of the steering motor M1, so that a bevel gear mechanism is configured by the large bevel gear and the small bevel gear.

When the steering motor M1 is driven to rotate in the above configuration, this rotation is transmitted to the ball nut via the bevel gear mechanism and the ball nut rotates on the axis. This rotation is transformed into movement in the axial direction of the steering shaft 11, so that the front wheels 10, 10 are steered according to this movement.

Inside the pinion housing H2 where the other steering motor M2 is attached, a pinion shaft 15 which is a component of a rack-and-pinion steering mechanism is rotatably borne. The pinion shaft 15 is made to be meshed with rack teeth formed at a corresponding portion of the rack shaft 11 inside the housing H1, at a crossing portion of the pinion housing H2 and the housing H1 as is well known.

Moreover, an output end of the steering motor M2 extending inside the pinion housing H2 is made to be a power transmission structure to the pinion shaft 15 via appropriate power transmitting means such as a warm gear mechanism. This power transmission structure is a structure which is in wide practical use in a rack-and-pinion type electric power steering apparatus for power transmission from a motor for steering to a pinion shaft, and explanation on the concrete configuration of each component will be omitted.

When the steering motor M2 is driven to rotate in the above configuration, the pinion shaft 15 rotates under reduction by the power transmitting means such as the warm gear mechanism and this rotation is transformed at a meshing portion with the rack teeth into movement in the axial direction of the steering shaft 11, so that the front wheels 10, 10 are steered according to this movement.

The two steering motors M1, M2 are driven by a motor driver circuit 40 which is controlled by a control unit 37; current flowing through the steering motors M1, M2 is detected by a current detector 41; and the detection signal thereof is given to the control unit 37.

The control unit 37 controls the motor driver circuit 40 based on the steering torque applied to the steering wheel 31, which is detected by the torque sensor 30, and the vehicle speed detected by a speed sensor 23.

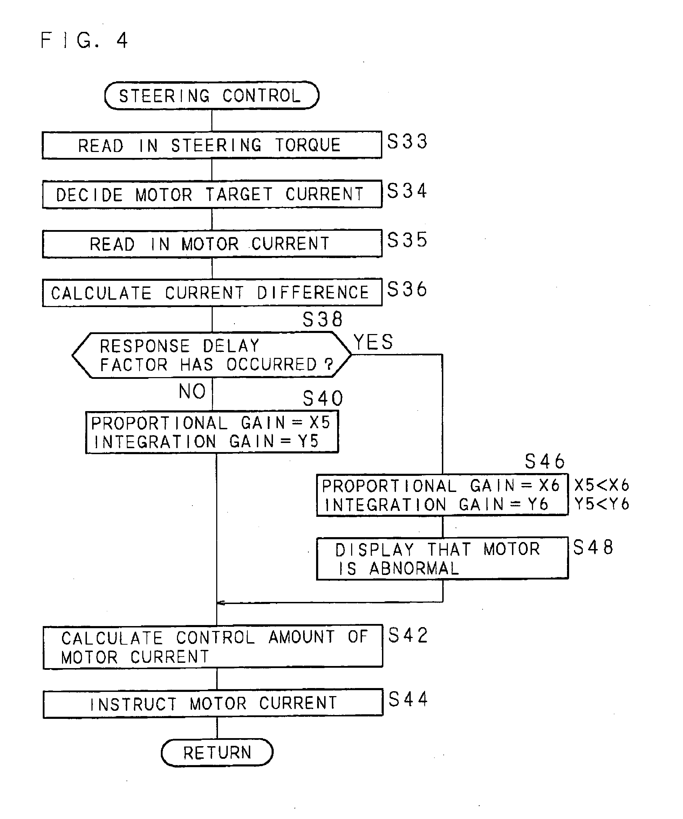

The following description will explain the steering control operation of a vehicle steering device having such a structure with reference to the flow chart in FIG. 4 referring to the same.

The control unit 37 first reads in a value of a steering torque applied to the steering wheel 31 which is detected by the torque sensor 30 (S33), and decides a motor target current based on the read-in value of a steering torque (S34), and the control unit 37 then reads in a value of motor current detected by the current detector 41 (S35).

Next, the control unit 37 calculates a current difference between the motor target current and the motor current (S36), and compares the calculated current difference with a predetermined current value so as to judge whether a response delay factor has occurred or not (S38) (detecting means).

When judging that the calculated current difference is smaller than or equal to the predetermined current value and a response delay factor has not occurred (S38), the control unit 37 sets the proportional gain to a normal value X5 and the integration gain to a normal value Y5 (S40), and calculates a control amount of motor current by an expression (5) (S42).

$$\text{Control amount} = \text{Current difference} \times \text{X5}$$
$$+ \text{Integration value of current difference} \times \text{Y5} \quad (5)$$

When judging that the calculated current difference is larger than the predetermined value and a response delay factor has occurred (S38), the control unit 37 sets the proportional gain to a value X6 larger than the normal value X5 and the integration gain to a value Y6 larger than the normal value Y5 (S46), and then displays the fact that the motor is abnormal on a display unit not shown (S48). The control unit 37 then calculates a control amount of motor current by an expression (6) (S42).

$$\text{Control amount} = \text{Current difference} \times \text{X6}$$
$$+ \text{Integration value of current difference} \times \text{Y6} \quad (6)$$

The control unit 37 instructs the motor driver circuit 40 to output the calculated control amount (S42) of motor current (S44), and returns the procedure.

It should be noted that the present invention is not limited to the configuration of Embodiments 1 and 2 described above wherein the steering motor M1 drives the steering shaft 11 and the steering motor M2 drives the pinion shaft 15 to rotate, and various combinations can be employed for the mounting position of the steering motors M1 and M2, such as a configuration wherein the steering motor M2 drives the second steering shaft 42 to rotate or a configuration wherein the steering motor M2 also drives the steering shaft 11.

The present invention can be applied to what comprises a steering device for vehicles.

**Claims**

**1.** A method for controlling steering device for vehicles, the steering device comprising two electric motors (M1, M2) imparting a steering force to a steering mechanism, wherein the two electric motors (M1, M2) are configured to be applied identical current via a single driver circuit (24, 40), and controlling means (3 or 37) performing drive control of the two electric motors (M1, M2) with an identical gain based on a steering torque or a steering amount, wherein the control means comprises detecting means (3 or 37) for detecting that the electric motors (M1, M2) cannot be driven, and
the method comprises the step of increasing the gain by a predetermined amount when the detecting means (3 or 37) detects that any one of the electric motors (M1, M2) cannot be driven.

**2.** The method as set forth in claim 1, wherein the detecting means (3 or 37) detects that an electric motor cannot be driven based on a response delay in drive control by the controlling means (3 or 37).

**3.** The method as set forth in claim 1 or 2, wherein the control means comprises displaying means, and the method comprises the step of displaying that an electric motor cannot be driven when the detecting means (3 or 37) detects that the electric motor cannot be driven.

4. The method as set forth in claim 2, wherein the steering device for vehicles further comprises: steering angle detecting means (22); steering change angle detecting means (16); and calculating means (3) for calculating a difference between the steering angle detected by the steering angle detecting means (22) and the steering change angle detected by the steering change angle detecting means (16) as a target operation amount; and it is judged to be the response delay when the target operation exceeds a predetermined value.

5. The method as set forth in claim 2, wherein the steering device for vehicles further comprises a motor current detector (25), and it is judged to be the response delay when difference between the motor target current calculated by the controlling means (3 or 37) and the motor current detected by the motor current detector (25) exceeds a predetermined value.

6. A steering device for vehicles comprising: two electric motors (M1, M2) imparting a steering force to a steering mechanism; wherein the two electric motors (M1, M2) are configured to be applied identical current via a single driver circuit (24, 40), and controlling means (3 or 37) performing drive control of the two electric motors (M1, M2) with an identical gain based on a steering torque or a steering amount; wherein

detecting means (3 or 37) for detecting that the electric motors (M1, M2) cannot be driven is provided, and

the controlling means (3 or 37) increases the gain by a predetermined amount when the detecting means (3 or 37) detects that any one of the electric motors (M1, M2) cannot be driven.

7. The steering device for vehicles as set forth in claim 6, wherein the detecting means (3 or 37) detects that an electric motor cannot be driven based on a response delay in driver control by the controlling means (3 or 37).

8. The steering device for vehicles as set forth in claim 6 or 7, further comprising means for displaying that an electric motor cannot be driven when the detecting means (3 or 37) detects that the electric motor cannot be driven.

9. The steering device for vehicles as set forth in claim 7, further comprising: steering angle detecting means (22); steering change angle detecting means (16); and calculating means (3) for calculating a difference between the steering angle detected by the steering angle detecting means (22) and the steering change angle detected by the steering change angle detecting means (16) as a target operation amount; and it is judged to be the response delay when the target operation exceeds a predetermined value.

10. The steering device for vehicles as set forth in claim 7, further comprising a motor current detector (25), wherein it is judged to be the response delay when difference between the motor target current calculated by the controlling means (3 or 37) and the motor current detected by the motor current detector (25) exceeds a predetermined value.

**Patentansprüche**

1. Ein Verfahren zum Steuern einer Lenkvorrichtung für Fahrzeuge, wobei die Lenkvorrichtung zwei elektrische Motoren (M1, M2) aufweist, die eine Lenkkraft an einen Lenkmechanismus weitergeben, wobei die zwei elektrischen Motoren (M1, M2) derart konfiguriert sind, dass an sie ein identischer Strom über eine einzelne Antriebs- bzw. Treiberschaltung (24, 40) angelegt wird, und Steuermittel (3 oder 37), die eine Antriebs- bzw. Treibersteuerung von den zwei elektrischen Motoren (M1, M2) mit einer identischen Verstärkung bzw. einem identischen Gewinn durchführen, und zwar basierend auf einem Lenkdrehmoment oder einer Lenkgröße, wobei

die Steuermittel Detektionsmittel (3 oder 37) aufweisen, um zu Detektieren, dass die elektrischen Motoren (M1, M2) nicht angetrieben werden können, und

das Verfahren den Schritt aufweist zum Erhöhen der Verstärkung um eine vorherbestimmte Größe, wenn die Detektionsmittel (3 oder 37) detektieren, dass irgendeiner von den elektrischen Motoren (M1, M2) nicht angetrieben werden kann.

2. Verfahren nach Anspruch 1, wobei die Detektionsmittel (3 oder 37) Detektieren, dass ein elektrischer Motor nicht angetrieben werden kann und zwar basierend auf einer Ansprechverzögerung in der Antriebssteuerung durch die Steuermittel (3 oder 37).

3. Verfahren nach Anspruch 1 oder 2, wobei die Steuermittel Anzeigemittel aufweisen, und das Verfahren den Schritt aufweist zum Anzeigen, dass ein elektrischer Motor nicht angetrieben werden kann, wenn die Detektionsmittel (3 oder 37) Detektieren, das der elektrische Motor nicht angetrieben werden kann.

4. Verfahren nach Anspruch 2, wobei die Lenkvorrichtung für Fahrzeuge ferner aufweist: Lenkwinkel-Detektionsmittel (22); Lenkänderungswinkel-Detektionsmittel (16); und Berechnungsmittel (3) zum Berechnen einer Differenz zwischen dem Lenkwinkel, detektiert durch die Lenkwinkel-Detektionsmittel (22) und dem Lenkänderungswinkel, detektiert durch die Lenkänderungswinkel-Detektionsmittel (16) und zwar als eine Ziel- bzw. Sollbetriebsgröße, und entschieden wird, dass es die Ansprechverzögerung ist, wenn die Sollbetriebsgröße einen vorherbestimmten Wert übersteigt.

5. Verfahren nach Anspruch 2, wobei die Lenkvorrichtung für Fahrzeuge ferner einen Motorstromdetektor (25) aufweist und entschieden wird, dass es die Ansprechverzögerung ist, wenn die Differenz zwischen dem Motorsollstrom, berechnet durch die Steuermittel (3 oder 37), und dem Motorstrom, detektiert durch den Motorstromdetektor (25), einen vorherbestimmten Wert übersteigt.

6. Eine Lenkvorrichtung für Fahrzeuge, die aufweist:

   zwei elektrische Motoren (M1, M2), die eine Lenkkraft auf einen Lenkmechanismus weitergeben; wobei die zwei elektrischen Motoren (M1, M2) derart konfiguriert sind, dass an sie ein identischer Strom über eine einzelne Antriebs- bzw. Treiberschaltung (24, 40) angelegt wird, und
   Steuermittel (3 oder 37), die eine Antriebssteuerung von den zwei elektrischen Motoren (M1, M2) mit einem identischen Gewinn bzw. einer identischen Verstärkung ausführen, und zwar basierend auf einem Lenkdrehmoment oder einer Lenkgröße, wobei
   Detektionsmittel (3 oder 37) vorgesehen sind zum Detektieren, dass die elektrischen Motoren (M1, M2) nicht angetrieben werden können, und
   die Steuermittel (3 oder 37) die Verstärkung um eine vorherbestimmte Größe erhöhen, wenn die Detektionsmittel (3 oder 37) detektieren, dass irgendeiner von den elektrischen Motoren (M1, M2) nicht angetrieben werden kann.

7. Lenkvorrichtung für Fahrzeuge nach Anspruch 6, wobei die Detektionsmittel (3 oder 37) Detektieren, dass ein elektrischer Motor nicht angetrieben werden kann und zwar basierend auf einer Ansprechverzögerung in der Antriebssteuerung durch die Steuermittel (3 oder 37).

8. Lenkvorrichtung für Fahrzeuge nach Anspruch 6 oder 7, die ferner Mittel aufweist, zum Anzeigen, dass ein elektrischer Motor nicht angetrieben werden kann, wenn die Detektionsmittel (3 oder 37) Detektieren, dass der elektrische Motor nicht angetrieben werden kann.

9. Lenkvorrichtung für Fahrzeuge nach Anspruch 7, die ferner aufweist:

   Lenkwinkel-Detektionsmittel (22); Lenkänderungswinkel-Detektionsmittel (16); und Berechnungsmittel (3) zum Berechnen einer Differenz zwischen dem Lenkwinkel, detektiert durch die Lenkwinkel-Detektionsmittel (22), und dem Lenkänderungswinkel, detektiert durch die Lenkänderungswinkel-Detektionsmittel (16) als eine Ziel- bzw. Sollbetriebsgröße;
   und entschieden wird, dass es die Ansprechverzögerung ist, wenn die Sollbetriebsgröße einen vorherbestimmten Wert übersteigt.

10. Lenkvorrichtung für Fahrzeuge nach Anspruch 7, die ferner einen Motorstromdetektor (25) aufweist, wobei entschieden wird, dass es die Ansprechverzögerung ist, wenn die Differenz zwischen dem Motorzielstrom, berechnet durch die Steuermittel (3 oder 37), und dem Motorstrom, detektiert durch den Motorstromdetektor (25), einen vorherbestimmten Wert übersteigt.

**Revendications**

1. Procédé de commande d'un dispositif de direction pour véhicules, le dispositif de direction comprenant deux moteurs électriques (M1, M2) communiquant une force de direction à un mécanisme de direction, dans lequel les deux moteurs électriques (M1, M2) sont agencés pour recevoir l'application d'un courant identique par l'intermédiaire d'un seul circuit de pilotage (24, 40), et des moyens de commande (3 ou 37) effectuant une commande de pilotage des deux moteurs électriques (M1, M2) avec un gain identique sur la base d'un couple de direction ou d'une quantité de direction, dans lequel

les moyens de commande comprennent des moyens de détection (3 ou 37) pour détecter que les moteurs électriques (M1, M2) ne peuvent pas être pilotés, et

le procédé comprend une étape d'augmentation du gain d'une quantité prédéterminée lorsque les moyens de détection (3 ou 37) détectent que l'un quelconque des moteurs électriques (M1, M2) ne peut pas être piloté.

2. Procédé selon la revendication 1, dans lequel les moyens de détection (3 ou 37) détectent qu'un moteur électrique ne peut pas être piloté sur la base d'un retard de réponse dans la commande de pilotage par les moyens de commande (3 ou 37).

3. Procédé selon la revendication 1 ou 2, dans lequel les moyens de commande comprennent des moyens d'affichage, et le procédé comprend une étape d'affichage qu'un moteur électrique ne peut pas être piloté lorsque les moyens de détection (3 ou 37) détectent que le moteur électrique ne peut pas être piloté.

4. Procédé selon la revendication 2, dans lequel le dispositif de direction pour véhicules comprend en outre : des moyens de détection d'angle de direction (22) ; des moyens de détection d'angle de changement de direction (16) ; et des moyens de calcul (3) pour calculer une différence entre l'angle de direction détecté par les moyens de détection d'angle de direction (22) et l'angle de changement de direction détecté par les moyens de détection d'angle de changement de direction (16) en tant que quantité d'actionnement cible ; et on détermine la présence du retard de réponse lorsque la quantité d'actionnement cible dépasse une valeur prédéterminée.

5. Procédé selon la revendication 2, dans lequel le dispositif de direction pour véhicules comprend en outre un détecteur de courant de moteur (25), et on détermine la présence du retard de réponse lorsque la différence entre le courant de moteur cible calculé par les moyens de commande (3 ou 37) et le courant de moteur détecté par le détecteur de courant de moteur (25) dépasse une valeur prédéterminée.

6. Dispositif de direction pour véhicules comprenant :

deux moteurs électriques (M1, M2) communiquant une force de direction à un mécanisme de direction ; dans lequel les deux moteurs électriques (M1, M2) sont agencés pour recevoir l'application d'un courant identique par l'intermédiaire d'un seul circuit de pilotage (24, 40), et des moyens de commande (3 ou 37) effectuant un contrôle de pilotage des deux moteurs électriques (M1, M2) avec un gain identique sur la base d'un couple de direction ou d'une quantité de direction ; dans lequel

on prévoit des moyens de détection (3 ou 37) pour détecter que les moteurs électriques (M1, M2) ne peuvent pas être pilotés, et

les moyens de commande (3 ou 37) augmentent le gain d'une quantité prédéterminée lorsque les moyens de détection (3 ou 37) détectent que l'un quelconque des moteurs électriques (M1, M2) ne peut pas être piloté.

7. Dispositif de direction pour véhicules selon la revendication 6, dans lequel les moyens de détection (3 ou 37) détectent qu'un moteur électrique ne peut pas être piloté sur la base d'un retard de réponse dans la commande de pilotage par les moyens de commande (3 ou 37).

8. Dispositif de direction pour véhicules selon la revendication 6 ou 7, comprenant en outre des moyens pour afficher qu'un moteur électrique ne peut pas être piloté lorsque les moyens de détection (3 ou 37) détectent que le moteur électrique ne peut pas être piloté.

9. Dispositif de direction pour véhicules selon la revendication 7, comprenant en outre : des moyens de détection d'angle de direction (22) ; des moyens de détection d'angle de changement de direction (16) ; et des moyens de calcul (3) pour calculer une différence entre l'angle de direction détecté par les moyens de détection d'angle de direction (22) et l'angle de changement de direction détecté par les moyens de détection d'angle de changement de direction (16) en tant que quantité d'actionnement cible ; et on détermine la présence du retard de réponse lorsque la quantité d'actionnement cible dépasse une valeur prédéterminée.

10. Dispositif de direction pour véhicules selon la revendication 7, comprenant en outre un détecteur de courant de moteur (25), dans lequel on détermine la présence du retard de réponse lorsqu'une différence entre le courant cible de moteur calculé par les moyens de commande (3 ou 37) et le courant de moteur détecté par le détecteur de courant de moteur (25) dépasse une valeur prédéterminée.

F I G. 1

EP 1 834 861 B1

# FIG. 2

( STEERING CONTROL )

| READ IN STEERING ANGLE | S2 |

| READ IN STEERING CHANGE ANGLE | S4 |

| CALCULATE STEERING CHANGE ACTUATOR TARGET OPERATION AMOUNT | S6 |

S8
< RESPONSE DELAY FACTOR HAS OCCURRED ? > — YES →

NO

S10
| PROPORTIONAL GAIN = X1 INTEGRATION GAIN = Y1 |

S28
| PROPORTIONAL GAIN = X2 | X1<X2 |
| INTEGRATION GAIN = Y2 | Y1<Y2 |

| CALCULATE CONTROL AMOUNT OF STEERING CHANGE ACTUATOR | S12 |

| CALCULATE MOTOR TARGET CURRENT | S14 |

| READ IN MOTOR CURRENT | S16 |

| CALCULATE CURRENT DIFFERENCE | S18 |

S20
< RESPONSE DELAY FACTOR HAS OCCURRED ? > — YES →

NO

S22
| PROPORTIONAL GAIN = X3 INTEGRATION GAIN = Y3 |

S30
| PROPORTIONAL GAIN = X4 | X3<X4 |
| INTEGRATION GAIN = Y4 | Y3<Y4 |

S32
| DISPLAY THAT MOTOR IS ABNORMAL |

S24
| CALCULATE CONTROL AMOUNT OF MOTOR CURRENT |

| INSTRUCT MOTOR CURRENT | S26 |

( RETURN )

12

FIG. 3

F I G. 4

```
              ( STEERING CONTROL )
                        |
         [ READ  IN  STEERING  TORQUE ]  S33
                        |
         [ DECIDE MOTOR TARGET CURRENT ]  S34
                        |
         [ READ  IN  MOTOR  CURRENT ]  S35
                        |
         [ CALCULATE CURRENT DIFFERENCE ]  S36
                        |            S38
              < RESPONSE DELAY          >  YES
              < FACTOR HAS OCCURRED ? >------------+
                   NO  |    S40                    |
         [ PROPORTIONAL GAIN = X5 ]                |
         [ INTEGRATION  GAIN = Y5 ]                |
                     |                         S46 |
                     |      [ PROPORTIONAL GAIN = X6 ] X5<X6
                     |      [ INTEGRATION  GAIN = Y6 ] Y5<Y6
                     |                             |
                     |      [ DISPLAY THAT MOTOR ] S48
                     |      [     IS ABNORMAL    ]  |
                     |<----------------------------+
         [ CALCULATE CONTROL AMOUNT OF ]  S42
         [ MOTOR CURRENT              ]
                     |
         [ INSTRUCT MOTOR CURRENT ]  S44
                     |
               ( RETURN )
```

14

**EP 1 834 861 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10218000 A
- EP 0857638 A2
- JP 3232030 B